# EUROPEAN PATENT APPLICATION

(11) **EP 4 342 669 A1**
(43) Date of publication of application: **27.03.2024**
(21) Application number: 22804624.9
(22) Date of filing: 16.05.2022
(51) Int. Cl.: B32B 27/28, B32B 27/00, B65D 65/40

(54) **LAMINATE, PACKAGING MATERIAL, AND CONTAINER**

(30) Priority: 17.05.2021 JP 2021082989
(71) Applicant: Kaneka Corporation, Osaka-shi, Osaka 530-8288 (JP)
(72) Inventor: OKADA, Yasunori, Settsu-shi, Osaka 566-0072 (JP); OKURA, Tetsuo, Settsu-shi, Osaka 566-0072 (JP)
(74) Representative: Vossius & Partner Patentanwälte Rechtsanwälte mbB
(86) International application number: PCT/JP2022/020321
(87) International publication number: WO 2022/244712

(57) **Abstract**

A laminated article includes a substrate layer, a gas barrier layer, and a sealant layer. The sealant layer is located on one outermost side of the laminated article. The sealant layer is a resin layer containing poly(3-hydroxybutyrate-co-3-hydroxyhexanoate). In a crystalline melting curve obtained by differential scanning calorimetry of the sealant layer, the sealant layer has at least one top temperature (Tma) in a range of 130 to 160°C.

## Description

### Technical Field

The present invention relates to a laminated article including a gas barrier layer and a heat-sealable sealant layer and to a packaging material or container including the laminated article.

### Background Art

Packaging materials used to package foods, toiletry products, pharmaceutical products, etc. are required to have gas barrier properties to prevent air-induced quality deterioration of the packaged contents. It is known practice to make a packaging material having gas barrier properties by using a laminated article including a substrate layer such as paper or a resin film and a gas barrier layer such as an aluminum foil or a vapor-deposited layer which is located on top of the substrate layer.

A packaging material is also known which includes the laminated article and a sealant layer made of a thermoplastic resin and located on one side of the laminated article and which thus has both gas barrier properties and heat sealability. Known examples of the thermoplastic resin forming the sealant layer include polyesters and polyolefins (see Patent Literatures 1 and 2, for example).

Patent Literature 3 describes using a biodegradable polymer as the thermoplastic resin forming the sealant layer of the packaging material, and mentions poly(3-hydroxybutyrate-co-3-hydroxyvalerate), polybutylene succinate, and the like as specific examples of the biodegradable polymer (see paragraphs [0029] and [0030]). A widely-known biodegradable polymer is polylactic acid.

Environmental problems caused by waste plastics have become an issue of great concern. In particular, it has been found that a huge amount of plastics dumped at seas or carried into seas through rivers etc. are drifting in the ocean on a global scale. Such plastics, which retain their shapes for a long period of time, are pointed out as having harmful effects on the ecosystems, and examples of plastics-induced problems include: a phenomenon called ghost fishing where plastics catch or trap marine creatures; and eating disorder from which marine creatures having ingested plastics suffer due to the plastics remaining in their digestive organs. There is also known a problematic phenomenon where plastics are broken into microplastic particles by the action of ultraviolet rays or any other cause, then the microplastic particles adsorb hazardous compounds present in seawater, and marine creatures ingest the microplastic particles with the adsorbed compounds, so that hazardous substances are introduced into the food chain.

The use of biodegradable plastics that exhibit seawater degradability is expected as means for addressing the plastics-induced marine pollution as described above.

### Citation List

### Patent Literature

PTL 1: Japanese Laid-Open Patent Application Publication No. 2016-210156
PTL 2: Japanese Laid-Open Patent Application Publication No. 2018-176441
PTL 3: Japanese Patent No. 5763776

### Summary of Invention

### Technical Problem

Some thermoplastic resins conventionally reported as a material forming a sealant layer of a packaging material do not exhibit seawater degradability. Additionally, resins that exhibit seawater degradability are generally disadvantageous in that they suffer from poor bond performance when subjected to heat sealing.

In the case where a resin that suffers from poor bond performance when subjected to heat sealing is used to form a sealant layer of a packaging material including a substrate layer such as paper and a gas barrier layer, it is desired that the heat sealing temperature be relatively high since the substrate layer or gas barrier layer might act as a heat-insulating layer. However, if heat sealing is performed at a high temperature, the melt viscosity of the resin-containing material forming the sealant layer (this material will be referred to as "sealant material" hereinafter) significantly decreases, and the sealant material leaks out of the heat-sealed region and attaches to a sealing bar of a machine such as a bag-making machine.

In view of the above circumstances, the present invention aims to provide a laminated article which includes a substrate layer, a gas barrier layer, and a sealant layer, the laminated article containing a resin that exhibits seawater degradability as a resin forming the sealant layer, the laminated article being able to ensure satisfactory bond strength when subjected to heat sealing and at the same time avoid leakage of the sealant material out of the heat-sealed region.

### Solution to Problem

The present inventors have found that the problem as described above in relation to a laminated article which includes a substrate layer, a gas barrier layer, and a sealant layer can be solved by forming the sealant layer from a particular resin and imparting particular melting characteristics to the sealant layer. Based on this finding, the inventors have completed the present invention.

Specifically, the present invention relates to a laminated article including a substrate layer, a gas barrier layer, and a sealant layer, wherein the sealant layer is located on one outermost side of the laminated article, the sealant layer is a resin layer containing poly(3-hydroxybutyrate-co-3-hydroxyhexanoate), and in a crystalline melting curve obtained by differential scanning calorimetry of the sealant layer, the sealant layer has at least one top temperature (Tma) in a range of 130 to 160°C.

### Advantageous Effects of Invention

The present invention can provide a laminated article which includes a substrate layer, a gas barrier layer, and a sealant layer, the laminated article containing a resin that exhibits seawater degradability as a resin forming the sealant layer, the laminated article being able to ensure satisfactory bond strength when subjected to heat sealing and at the same time avoid leakage of the sealant material out of the heat-sealed region.

### Brief Description of Drawings

FIG. 1 is a conceptual diagram showing the layer arrangement of a laminated article according to a first aspect.
FIG. 2 is a conceptual diagram showing the layer arrangement of a laminated article according to a second aspect.
FIG. 3 is a conceptual diagram showing the layer arrangement of a laminated article according to a third aspect.
FIG. 4 is a conceptual diagram showing the layer arrangement of a laminated article according to a fourth aspect.
FIG. 5 is a conceptual diagram showing the layer arrangement of a laminated article according to a fifth aspect.
FIG. 6 shows an example of differential scanning calorimetry (DSC) charts.
FIG. 7 shows another example of differential scanning calorimetry (DSC) charts.

### Description of Embodiments

Hereinafter, an embodiment of the present invention will be described. The present invention is not limited to the embodiment described below.

A laminated article according to the present embodiment includes at least a substrate layer, a gas barrier layer, and a sealant layer. The sealant layer is located on one outermost side of the laminated article so that different portions of the sealant layer may be brought into contact and heat-sealed together. Except for the location of the sealant layer, there is no particular limitation on the order in which the layers are arranged. That is, the substrate layer, the gas barrier layer, and the sealant layer may be arranged in this order. Alternatively, the gas barrier layer, the substrate layer, and the sealant layer may be arranged in this order.

An adhesive layer may be formed between the adjacent layers to bond the layers to each other, or the layers may be arranged directly on each other without any adhesive layer. A printed layer may be formed on the opposite side of the laminated article from the sealant layer. A protective layer may be formed on the printed layer to protect the printed layer. Hereinafter, each of the layers will be described.

### (Substrate Layer)

The substrate layer is not limited to a particular type of layer and may be any layer on which the gas barrier layer and the sealant layer can be placed. In terms of increasing the biodegradability of the laminated article as a whole, the substrate layer is preferably a biodegradable layer. Examples of the biodegradable substrate layer include, but are not limited to, a layer of paper (whose main component is cellulose), a layer of cellophane, a layer of cellulose ester, a layer of polyvinyl alcohol, a layer of polyamino acid, a layer of polyglycolic acid, and a layer of pullulan. A layer of paper or cellophane is preferred because such a layer has high heat resistance and is inexpensive, and a layer of paper is particularly preferred. The paper is not limited to a particular type, and the type of the paper can be selected as appropriate depending on the intended use of the laminated article. Specific examples of the paper include cup paper, kraft paper, high-quality paper, coated paper, tissue paper, glassine paper, and paperboard. The paper may contain an additive such as a water-resisting agent, a water repellent, or an inorganic substance which is added as necessary.

The substrate layer may be one subjected to a surface treatment such as corona treatment, flame treatment, or anchor coat treatment in advance. One of such surface treatments may be performed alone, or two or more surface treatments may be used in combination.

### (Gas Barrier Layer)

The gas barrier layer is not limited to a particular type of layer and may be any layer that blocks gas permeation and has lower gas permeability than the substrate layer and the sealant layer. A conventionally known gas barrier layer can be used, and specific examples of the gas barrier layer include a metal foil, a vapor-deposited film, a resin film, and a coating layer made of an inorganic substance. The gas barrier layer used may consist of only one type of layer or two or more types of layers placed on one another.

An example of the metal foil is an aluminum foil.

The vapor-deposited film contains an inorganic material and may be made only of the inorganic material. Examples of the inorganic material include metals and inorganic oxides. Specific examples include, but are not limited to, aluminum, aluminum oxide, silicon oxides (such as silicon monoxide, silicon dioxide, and silicon oxynitride), cerium oxide, calcium oxide, and diamond-like carbon. One of these materials may be used alone, or two or more thereof may be used in combination. In terms of the adhesion after vapor deposition, the vapor-deposited film is preferably a vapor-deposited metal film, a vapor-deposited metal oxide film, or a vapor-deposited silicon oxide film and particularly preferably a vapor-deposited aluminum film or a vapor-deposited silicon oxide film.

The thickness of the vapor-deposited film is not limited to a particular range. In terms of productivity, handleability, visual appearance etc., the thickness of the vapor-deposited film is preferably from 5 to 100 nm and more preferably from 5 to 60 nm. When the thickness of the vapor-deposited film is 5 nm or more, the vapor-deposited layer is less likely to have defects and has good gas barrier properties. When the thickness of the vapor-deposited film is 100 nm or less, the cost for vapor deposition is low, and the vapor-deposited film has a good visual appearance without conspicuous coloring.

Examples of the resin film forming the gas barrier layer include a polyvinyl alcohol film, an ethylene-vinyl alcohol copolymer film, a polyglycolic acid film, and a film of polyolefin (such as polyethylene or polypropylene).

Examples of the inorganic substance forming the gas barrier layer include talc, clay, montmorillonite, and vermiculite plate-like crystals.

The gas barrier layer preferably includes at least one selected from the group consisting of a metal foil, a vapor-deposited metal film, a vapor-deposited metal oxide film, a vapor-deposited silicon oxide film, a polyvinyl alcohol film, and an ethylene-vinyl alcohol copolymer film and more preferably includes at least one selected from the group consisting of a metal foil, a vapor-deposited metal film, a vapor-deposited metal oxide film, and a vapor-deposited silicon oxide film. The thickness of the gas barrier layer can be chosen as appropriate in view of the desired gas barrier properties.

### (Sealant Layer)

The sealant layer contains at least poly(3-hydroxybutyrate-co-3-hydroxyhexanoate) (also referred to as "P3HB3HH" hereinafter). P3HB3HH is a copolymer of 3-hydroxybutyrate and 3-hydroxyhexanoate. The copolymerization is not limited to a particular type and may be random copolymerization, alternating copolymerization, block copolymerization, or graft copolymerization. Random copolymerization is preferred.

Polylactic acid and polybutylene succinate, which are widely used as biodegradable resins, do not exhibit sufficient biodegradability in seawater. In contrast, P3HB3HH is known to exhibit excellent seawater degradability. Additionally, P3HB3HH has the advantage of exhibiting higher bond strength when subjected to heat sealing than poly(3-hydroxybutyrate-co-3-hydroxyvalerate) which is also known to have seawater degradability. Furthermore, P3HB3HH can be heat-sealed at a relatively low temperature, and this can prevent the substrate layer from discoloring due to heat during heat sealing.

P3HB3HH further offers the following advantages: the ratio between the constituent monomers can be varied to change the melting point and crystallinity and thus adjust the physical properties such as the Young's modulus and heat resistance to levels intermediate between those of polypropylene and polyethylene; and P3HB3HH is easy to industrially produce. Additionally, P3HB3HH can have a low melting point and be workable at a relatively low temperature.

The sealant layer may contain only one type of P3HB3HH and preferably contains at least two types of P3HB3HH differing in the ratio between the constituent monomers.

P3HB3HH is an aliphatic polyester resin producible by microorganisms. A known P3HB3HH-producing bacterium is *Alcaligenes eutraphus* AC32 (FERM BP-6038; see T. Fukui, Y. Doi, J. Bacteriol., 179, pp. 4821-4830 (1997)) having a P3HA synthase gene introduced. P3HB3HH can be produced also by, for example, a method described in WO 2010/013483. An example of commercially-available P3HB3HH is "Kaneka Biodegradable Polymer PHBH^{™}" of Kaneka Corporation.

In a crystalline melting curve obtained by differential scanning calorimetry, the sealant layer has at least one top temperature (Tma) in the range of 130 to 160°C. The presence of the Tma means that the sealant layer contains a high-melting-point resin component having a melting point in the range of 130 to 160°C. During heat sealing, crystals of the high-melting-point resin component do not completely melt, but remain and act as crystal nuclei to accelerate solidification of the sealant material. This makes it possible to ensure satisfactory bond strength by heat sealing and at the same time prevent the sealant material from leaking out of the sealed region. The temperature range where the Tma lies is more preferably from 135 to 158°C and even more preferably from 140 to 156°C.

In a crystalline melting curve obtained by differential scanning calorimetry, the sealant layer may have no top temperature in a temperature range below 130°C.

However, in a preferred aspect, it is preferable that the sealant layer further have at least one top temperature (Tmb) in the range of 40°C to below 130°C as well as the Tma in a crystalline melting curve obtained by differential scanning calorimetry and that the temperature difference between the Tma and the Tmb be 10°C or more.

The presence of the Tmb means that the sealant layer contains a low-melting-point resin component having a melting point in the range of 40°C to below 130°C. The low-melting-point resin component offers hot tack properties during heat sealing, and the bond strength achieved by heat sealing can be further improved. The temperature range where the Tmb lies is more preferably from 45 to 125°C, even more preferably from 70 to 120°C, and still even more preferably from 75 to 115°C.

When the temperature difference between the Tma and the Tmb is 10°C or more, it is easy to melt the low-melting-point resin component while allowing the crystals of the high-melting-point resin component to remain. Thus, the prevention of leakage of the sealant material can be readily achieved along with the improvement in bond strength. The temperature difference between the Tma and the Tmb is preferably 20°C or more, more preferably 25°C or more, even more preferably 30°C or more, and particularly preferably 35°C or more. The upper limit of the temperature difference between the Tma and the Tmb is not limited to a particular value. In terms of ease of preparation of a resin that exhibits the temperature difference, the temperature difference is preferably 120°C or less, more preferably 90°C or less, and even more preferably 60°C or less.

The sealant layer preferably has no top temperature in a temperature range above 160°C in a crystalline melting curve obtained by differential scanning calorimetry. If the sealant layer has the Tma in the range of 130 to 160°C and further has another top temperature in a temperature above 160°C, crystal nuclei of the high-melting-point resin component remain in an excessively large amount during heat sealing, and the heat sealability declines. If the heat sealing temperature is raised to avoid an excessively large amount of crystal nuclei remaining during the heat sealing, thermal decomposition of the resin could take place to a significant extent, and the sealant layer could have a reduced mechanical strength leading to a low heat seal strength.

In the present specification, the Tma and the Tmb in a crystalline melting curve obtained by differential scanning calorimetry are defined as follows.

An aluminum pan is charged with 4 to 10 mg of the sealant layer separated as a sample from another layer, and the sample is subjected to differential scanning calorimetry which uses a differential scanning calorimeter and in which the sample is melted under a stream of nitrogen by increasing the temperature from 20 to 190°C at a rate of 10°C/min. In the crystalline melting curve obtained by the calorimetry, a top temperature at which the amount of absorbed heat reaches a maximum in a melting point peak located in the range of 130 to 160°C is defined as the Tma, and a top temperature at which the amount of absorbed heat reaches a maximum in a melting point peak located in the range of 40°C to below 130°C is defined as the Tmb.

When there are a plurality of melting point peaks in the range of 130 to 160°C, the top temperature of the highest of the melting point peaks is defined as the Tma. Likewise, when there are a plurality of melting point peaks in the range of 40°C to below 130°C, the top temperature of the highest of the melting point peaks is defined as the Tmb.

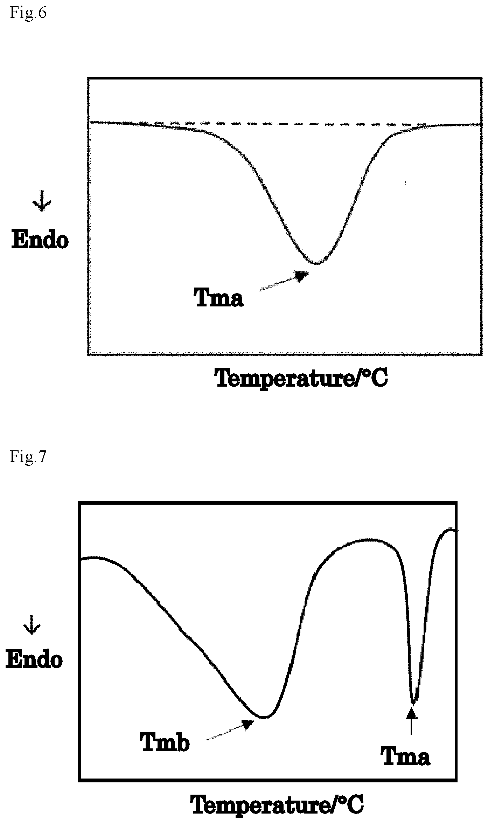

FIG. 6 shows a typical example of crystalline melting curves with the Tma, and FIG. 7 shows a typical example of crystalline melting curves with the Tma and the Tmb.

The sealant layer possessing the melting characteristics as described above can be obtained by making appropriate adjustments as to P3HB3HH used in the layer. To achieve the melting characteristics as described above, any of the following options may be employed as appropriate: selection of a suitable bacterium for producing P3HB3HH, selection of a suitable carbon source for use in culture of the bacterium, blending of different types of P3HB3HH differing in the percentage of 3HH, and addition of a homopolymer of 3HB (this homopolymer may be referred to as "P3HB" hereinafter).

To form the sealant layer, P3HB3HH obtained from a single species of microorganism may be used alone, or a blend of different types of P3HB3HH obtained from different species of microorganisms may be used.

When the P3HB3HH used in the sealant layer consists of a single type of P3HB3HH, the percentage of 3HH in the total content of 3HB and 3HH in the P3HB3HH is preferably from 3 to 9 mol% and more preferably from 3 to 7 mol%. When the percentage of 3HH in the P3HB3HH is from 3 to 9 mol%, the sealant layer having the melting characteristics can be easily formed. The percentage of 3HH can be determined by NMR analysis of the P3HB3HH.

When the P3HB3HH used in the sealant layer consists of a blend of different types of P3HB3HH, it is preferable to blend high-crystallinity P3HB3HH and low-crystallinity P3HB3HH. Instead of high-crystallinity P3HB3HH, P3HB may be blended with low-crystallinity P3HB3HH. The use of such a blend makes it easy to obtain the sealant layer having both the Tma and Tmb as described above.

The percentage of 3HH in the total content of 3HB and 3HH in the high-crystallinity P3HB3HH is preferably 3 mol% or less, more preferably 2 mol% or less, and even more preferably 1 mol% or less. The percentage of 3HH in the total content of 3HB and 3HH in the low-crystallinity P3HB3HH is preferably from 10 to 40 mol% and more preferably from 10 to 30 mol%.

The amount of the high-crystallinity P3HB3HH or P3HB is not limited to a particular range, but is preferably from 1 to 60 wt%, more preferably from 2 to 50 wt%, and even more preferably from 4 to 15 wt% based on the total amount of P3HB3HH and P3HB contained in the sealant layer.

The weight-average molecular weight of P3HB3HH contained in the sealant layer is preferably from 10 × 10⁴ to 70 × 10⁴, more preferably from 15 × 10⁴ to 65 × 10⁴, and even more preferably from 20 × 10⁴ to 60 × 10⁴. When the weight-average molecular weight of P3HB3HH is in the above range, the sealant layer subjected to heat sealing can exhibit high bond strength. The weight-average molecular weight of P3HB3HH can be determined as a polystyrene-equivalent molecular weight measured by gel permeation chromatography (GPC; "Shodex GPC-101" manufactured by Showa Denko K.K.) using a polystyrene gel ("Shodex K-804" manufactured by Showa Denko K.K) as the column and chloroform as the mobile phase.

The sealant layer may contain one or more resins other than P3HB3HH and optionally used P3HB to the extent that the effect of the invention is achieved. Examples of the other resins include: aliphatic polyester resins such as poly(3-hydroxybutyrate) resins other than P3HB3HH and P3HB, polybutylene succinate, polycaprolactone, and polylactic acid; and aliphatic-aromatic polyester resins such as polybutylene adipate terephthalate, polybutylene sebacate terephthalate, and polybutylene azelate terephthalate. The amount of these resins is preferably 10 parts by weight or less, more preferably 5 parts by weight or less, and even more preferably 1 part by weight or less per 100 parts by weight of the total amount of P3HB3HH and P3HB in order to ensure the seawater biodegradability of the sealant layer. The sealant layer need not contain any resin other than P3HB3HH and optionally used P3HB.

The sealant layer may contain additives commonly used in the art to the extent that the effect of the invention is achieved. Examples of the additives include: inorganic fillers such as talc, calcium carbonate, mica, silica, titanium oxide, and alumina; organic fillers such as chaff, wood powder, waste paper (e.g., newspaper), various kinds of starch, and cellulose; colorants such as pigments and dyes; odor absorbers such as activated carbon and zeolite; flavors such as vanillin and dextrin; and various other additives such as plasticizers, oxidation inhibitors, antioxidants, weathering resistance improvers, ultraviolet absorbers, nucleating agents, lubricants, mold releases, water repellents, antimicrobials, slidability improvers, tackifiers, fillers, and chemicals. The sealant layer may contain only one additive or may contain two or more additives. The amount of the additives can be set by those skilled in the art as appropriate depending on the intended use.

The thickness of the sealant layer is not limited to a particular range, but is preferably from 5 to 100 µm, more preferably from 10 to 50 µm, and even more preferably from 20 to 30 µm. When the thickness is in the above range, the sealant layer can avoid having defects such as pinholes, can have both sufficient flexibility and strength high enough for practical use, and can effectively exhibit properties such as water resistance.

### [Method for Forming Sealant Layer]

The sealant layer may be a P3HB3HH-containing resin film produced in advance or may be a resin layer formed on the surface of the substrate layer or gas barrier layer by melt extrusion or coating of a resin material.

The P3HB3HH-containing resin film can be produced by any of various molding methods such as T-die extrusion molding, blown film molding, and calendering. The details of the conditions can be set as appropriate.

### (Extrusion Lamination Method)

In one aspect, the sealant layer can be formed by an extrusion lamination method. Specifically, the sealant layer can be formed by extruding a molten resin material from a die, then cooling the extruded resin material while pressure-bonding the resin material to the surface of a target film (substrate layer or gas barrier layer) with the aid of a cooling roll, and immediately after that, separating the resin material from the cooling roll. The target film (in particular, a metal foil or cellophane) may be one subjected to anchor coat treatment in advance.

When extrusion lamination is carried out using a common poly(3-hydroxybutyrate) resin, the lamination layer (resin layer) is difficult to smoothly separate from the cooling roll, and this is likely to cause a phenomenon where a portion of the lamination layer temporarily sticks to the cooling roll. As a result of this phenomenon, the portion sticking to the roll is subjected to a force during separation from the roll, and white patches (minute irregularities) occur on the surface of the portion of the lamination layer. In contrast, when P3HB3HH having the melting characteristics as described above is used, the separability from the cooling roll improves, and a sealant layer having a good surface condition can be formed.

The heating temperature in extrusion lamination is more preferably set to Tma + 5 to 10°C so that some of the resin crystals may remain in the molten resin. By employing such a relatively low heating temperature, the reducing effect on neck-in and the improving effect on the separability from the roll can be effectively achieved. In terms of ensuring the bond performance to the substrate layer or gas barrier layer, the heating temperature is preferably 160°C or higher and more preferably 165°C or higher.

The surface temperature of the cooling roll used in the extrusion lamination method is not limited to a particular range, and any surface temperature at which the lamination layer can be cooled and pressure-bonded may be chosen as appropriate. The surface temperature of the cooling roll is preferably from 35 to 70°C and more preferably from 40 to 60°C. When the surface temperature of the cooling roll is in the above range, crystallization of P3HB3HH is accelerated. As a result, sticking of the lamination layer to the cooling roll is reduced, and solidification of the lamination layer can be completed in a short time.

### (Coating Method)

In another aspect, the sealant layer can be formed by a coating method. Specifically, the sealant layer can be formed by applying a P3HB3HH-containing coating liquid (preferably, aqueous coating liquid) to one side of the substrate layer or gas barrier layer and then heating and drying the applied coating liquid.

The coating method can be carried out using any suitable known technique and is not limited to a particular technique. For example, the coating method may include the steps of: (a) producing the aqueous coating liquid; (b) feeding the substrate layer or gas barrier layer; (c) applying the aqueous coating liquid to the substrate layer or gas barrier layer; and (d) drying a layer of the applied coating liquid into a solid layer.

The step (a) is not limited to a particular technique and may be performed as follows. That is, the step (a) uses a microbially produced P3HB3HH resin and includes disrupting microbial cells containing the P3HB3H in an aqueous dispersion of the microbial cells to separate the P3HB3H from the cells.

A commonly used technique for collecting P3HB3HH from microbial cells is to dissolve the P3HB3HH by using an organic solvent such as chloroform and precipitate and collect the P3HB3HH by using a solvent such as methanol or hexane in which the P3HB3HH is insoluble. However, this method is economically disadvantageous because the P3HB3HH is not obtained in the form of fine particles and there is a need for an additional step of processing the P3HB3HH into fine particles. In contrast, the step of disrupting microbial cells containing P3HB3HH in an aqueous dispersion of the microbial cells to separate the P3HB3HH from the cells can yield an aqueous dispersion of fine P3HB3HH particles which are made of the P3HB3HH produced in the microbial cells and a substantial portion of which have a sufficiently small particle size.

In the step of disrupting microbial cells containing P3HB3HH in an aqueous dispersion of the microbial cells to separate the P3HB3HH from the cells, it is preferable to perform the disruption and addition of an alkali simultaneously while stirring the microbial cells containing the P3HB3HH. This technique offers the following advantages: (i) the dispersion is prevented from having its viscosity increased by cellular components other than the P3HB3HH which leak out of the microbial cells; (ii) the prevention of viscosity increase of the cell dispersion allows for pH control, and continuous or intermittent addition of an alkali permits the process to proceed at a low alkali concentration; and (iii) molecular weight reduction of the P3HB3HH can be avoided, and the P3HB3HH separated can be of high purity. The cell dispersion preferably has a pH of 9 to 13.5 after the alkali addition. When the pH is 9 or higher, the P3HB3HH is easy to separate from the cells. When the pH is 13.5 or lower, decomposition of the P3HB3HH is likely to be avoided.

The microbial cell disruption may be accomplished using ultrasound or a device such as an emulsifying/dispersing machine, a high-pressure homogenizer, or a mill. Although the means for the microbial cell disruption is not limited to those mentioned below, the use of an emulsifying/dispersing machine such as Silverson Mixer (manufactured by Silverson), Clearmix (manufactured by M Technique Co., Ltd.), or Ebara Milder (manufactured by Ebara Corporation) is preferred in terms of dissolving out the P3HB3HH from the cells by the alkali treatment, efficiently disrupting nucleic acids which are a primary cause of viscosity increase, and thoroughly dispersing insoluble substances other than the P3HB3HH, such as cell walls, cell membranes, and insoluble proteins. The temperature for the microbial cell disruption and alkali addition is preferably from room temperature to 50°C. The temperature is preferably around room temperature since the P3HB3HH is likely to be decomposed if the temperature is higher than 50°C. Decreasing the temperature below room temperature requires a cooling operation and is not economical.

The dispersion resulting from the disruption and alkali treatment of the microbial cells is centrifuged to give a precipitate. The precipitate is washed with water and optionally with methanol, and finally a suitable amount of water is added. In this manner, an aqueous coating liquid containing the P3HB3HH at a desired solids concentration can be obtained.

The above step is preferably followed by the step of applying mechanical shear to the aqueous coating liquid to separate aggregated particles of the P3HB3HH from one another. The application of mechanical shear is preferred in terms of eliminating aggregates substantially and obtaining an aqueous coating liquid containing P3HB3HH particles which are uniform in particle size. The application of mechanical shear to the aqueous coating liquid can be accomplished, for example, by means such as a stirrer, a homogenizer, or ultrasound. At this stage, the P3HB3HH particles are not so strongly aggregated; thus, the use of a stirrer equipped with a common stirring blade is preferred in terms of simplicity.

The solids concentration of the P3HB3HH in the aqueous coating liquid is preferably from 25 to 65 wt%, more preferably from 30 to 55 wt%, and particularly preferably from 35 to 50 wt%. When the solids concentration of the P3HB3HH in the aqueous coating liquid is in the above range, coating uniformity can be achieved since the coating liquid has a suitable viscosity. Additionally, a film of the applied coating liquid can have a required thickness and is less likely to suffer from defects.

In terms of ensuring both the P3HB3HH productivity and the coating uniformity, the average particle size of the P3HB3HH in the aqueous coating liquid is, for example, from 0.1 to 50 µm, preferably from 0.5 to 30 µm, and more preferably from 0.8 to 20 µm. When the average particle size is 0.1 µm or more, the P3HB3HH can easily be obtained either by microbial production or by chemical synthesis. When the average particle size is 50 µm or less, uneven application of the aqueous coating liquid can be avoided. The average particle size of the P3HB3HH in the aqueous coating liquid can be measured by adjusting an aqueous suspension containing the P3HB3HH to a given concentration and subjecting the suspension to analysis using a widely used particle size analyzer such as Microtrac particle size analyzer (FRA manufactured by Nikkiso Co., Ltd.). The average particle size can be determined as a particle size at which the cumulative percentage in a normal distribution curve reaches 50% of all the particles.

The aqueous coating liquid need not contain any emulsifier but preferably contains an emulsifier to stabilize the coating liquid. Examples of the emulsifier include: anionic surfactants such as sodium lauryl sulfate and sodium oleate; cationic surfactants such as lauryl trimethyl ammonium chloride; non-ionic surfactants such as glycerin fatty acid esters and sorbitan fatty acid esters; and water-soluble polymers such as polyvinyl alcohol, ethylene-modified polyvinyl alcohol, polyvinylpyrrolidone, and methyl cellulose. The amount of the emulsifier is not limited to a particular range but is preferably from 1 to 10 wt% relative to the amount of the solids of the P3HB3HH. When the amount of the emulsifier is 1 wt% or more, the stabilizing effect of the emulsifier is likely to be obtained. When the amount of the emulsifier is 10 wt% or less, physical property deterioration or coloring due to incorporation of an excess amount of emulsifier into the P3HB3HH can be avoided.

The emulsifier can be added to the aqueous dispersion after the water washing following the centrifugation subsequent to the disruption and alkali treatment of the microbial cells. When methanol washing is carried out, the emulsifier can be added after the methanol washing and before or after a suitable amount of water is added to adjust the solids concentration of the P3HB3HH.

The steps (b) and (c) are not limited to particular techniques and can be performed using any techniques known in the art.

In one embodiment of the present invention, the heating temperature in the step (d) of drying a layer of the applied liquid into a solid layer is preferably from 130 to 180°C, more preferably from 135 to 175°C, and even more preferably from 140 to 170°C. By heating the layer of the applied liquid at such a temperature and thus drying it into a solid layer, the sealant layer having the melting characteristics as described above can be formed to obtain the laminated article.

The method for producing the laminated article may include the step (e) of winding up the laminated article after the step (d). The step (e) is not limited to a particular technique and can be performed using any technique known in the art.

### (Adhesive Layer)

The laminated article according to the present embodiment may include an adhesive layer as an optional layer. The adhesive layer may be formed between the substrate layer and the gas barrier layer, between the gas barrier layer and the sealant layer, or between the substrate layer and the sealant layer.

The adhesive used to form the adhesive layer is not limited to a particular type, and any conventionally known adhesive can be used. The method for bonding the adhesive layer to another layer is not limited to a particular technique, and examples of the method include: dry lamination in which the layers are bonded together by means of a two-part curable urethane adhesive; and non-solvent dry lamination in which the layers are bonded together by means of a solventless adhesive.

### (Printed Layer and Protective Layer)

The laminated article according to the present embodiment may include a printed layer as an optional layer. In the case where the laminated article includes a printed layer, the printed layer is preferably formed on the opposite side of the laminated article from the sealant layer. The printed layer may be formed on the surface of the substrate layer or the surface of the gas barrier layer.

The printed layer is not limited to particular details and can be formed by a known printing method using a known printing ink. Examples of the printing method include gravure printing, offset printing, gravure offset printing, flexographic printing, and inkjet printing. The printing ink may be a solvent-based ink or an aqueous ink. The printed layer may consist of a single layer or two or more layers.

A protective layer may be formed on the printed layer to protect the printed layer. The material of the protective layer can be selected from known materials. For example, a solvent-based or aqueous lacquer containing a resin and an additive can be used.

Hereinafter, specific aspects of the laminated article according to the present embodiment will be described. The configuration of the laminated article according to the present embodiment is not limited to those in the aspects described below.

### (First Aspect)

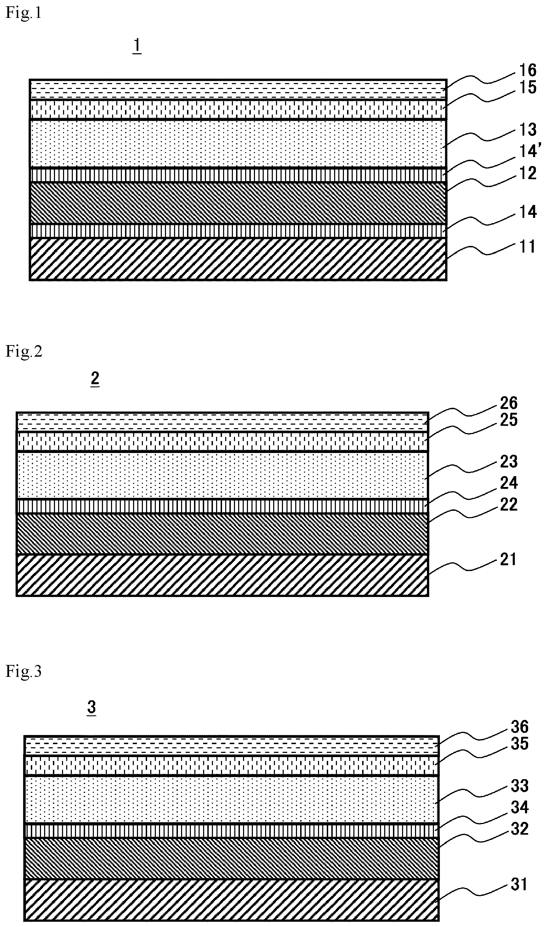

As shown in FIG. 1, a laminated article 1 according to a first aspect of the present embodiment includes a sealant layer 11, a first adhesive layer 14, a gas barrier layer 12, a second adhesive layer 14', a substrate layer 13, a printed layer 15, and a protective layer 16 which are arranged in this order.

The protective layer 16 may be omitted, or both the printed layer 15 and the protective layer 16 may be omitted. The same is true of the subsequent aspects.

The sealant layer 11 is preferably a resin film containing P3HB3HH. The gas barrier layer 12 is preferably a metal foil such as an aluminum foil. Each of the first and second adhesive layers 14 and 14' is preferably formed from an adhesive that can be used in dry lamination and particularly preferably formed from a urethane adhesive.

The method for producing the laminated article 1 is not limited to a particular technique. A method is preferred in which dry lamination is performed twice. The "dry lamination" refers to a processing method in which an adhesive is applied to and dried on one film and then the film is bonded to another film. For example, first, a resin film forming the sealant layer 11 and a metal foil forming the gas barrier layer 12 are bonded via the first adhesive layer 14 by dry lamination. The resulting layered structure made up of the sealant layer 11, the first adhesive layer 14, and the gas barrier layer 12 is combined with the substrate layer 13 by second dry lamination in which paper, cellophane, or any other material serving as the substrate layer 13 is bonded to the gas barrier layer 12 of the layered structure via the second adhesive layer 14'. The order of the two dry lamination steps may be reversed. After the second dry lamination, printing is performed on the substrate layer 13 to form the printed layer 15 and, if necessary, the protective layer 16 can be further formed on the printed layer 15. In this way, the laminated article 1 can be produced.

### (Second Aspect)

As shown in FIG. 2, a laminated article 2 according to a second aspect of the present embodiment includes a sealant layer 21, a gas barrier layer 22, an adhesive layer 24, a substrate layer 23, a printed layer 25, and a protective layer 26 which are arranged in this order.

The sealant layer 21 is preferably a resin film containing P3HB3HH. The gas barrier layer 22 is preferably a vapor-deposited film such as a vapor-deposited metal film, a vapor-deposited metal oxide film, or a vapor-deposited silicon oxide film. The adhesive layer 24 is preferably formed from an adhesive that can be used in dry lamination and particularly preferably formed from a urethane adhesive.

The method for producing the laminated article 2 is not limited to a particular technique. A method is preferred in which vapor deposition and dry lamination are carried out in sequence. For example, first, vapor deposition is performed on a resin film forming the sealant layer 21, and thus the gas barrier layer 22 is formed directly on the sealant layer 21. The resulting layered structure made up of the sealant layer 21 and the gas barrier layer 22 is combined with the substrate layer 23 by dry lamination in which paper, cellophane, or any other material serving as the substrate layer 23 is bonded to the gas barrier layer 22 of the layered structure via the adhesive layer 24. After that, the printed layer 25 is formed on the substrate layer 23 and, if necessary, the protective layer 16 is formed on the printed layer 25. In this way, the laminated article 2 can be produced.

### (Third Aspect)

As shown in FIG. 3, a laminated article 3 according to a third aspect of the present embodiment includes a sealant layer 31, a gas barrier layer 32, an adhesive layer 34, a substrate layer 33, a printed layer 35, and a protective layer 36 which are arranged in this order.

The sealant layer 31 is preferably a resin layer formed on the gas barrier layer 32 by an extrusion lamination method or a coating method. The gas barrier layer 32 is preferably a metal foil such as an aluminum foil. The adhesive layer 34 is preferably formed from an adhesive that can be used in dry lamination and particularly preferably formed from a urethane adhesive.

The method for producing the laminated article 3 is not limited to a particular technique. A method is preferred in which the sealant layer 31 is formed on the gas barrier layer 32 by an extrusion lamination method or a coating method and then the substrate layer 33 is bonded to the gas barrier layer 32 by dry lamination. The order of the steps may be reversed.

For example, first, a resin material containing P3HB3HH is melted and extruded from a die, and extrusion lamination is performed in which the sealant layer 31 made of the resin material is formed on one side of a metal foil forming the gas barrier layer 32. Alternatively, a coating liquid containing P3HB3HH may be prepared and applied to one side of a metal foil forming the gas barrier layer 32, and then the applied coating liquid may be dried to form the sealant layer 31. The resulting layered structure made up of the sealant layer 31 and the gas barrier layer 32 is combined with the substrate layer 33 by dry lamination in which paper, cellophane, or any other material serving as the substrate layer 33 is bonded to the gas barrier layer 32 of the layered structure via the adhesive layer 34. After that, the printed layer 35 is formed on the substrate layer 33 and, if necessary, the protective layer 36 is formed on the printed layer 35. In this way, the laminated article 3 can be produced.

In each of the laminated articles according to the first, second, and third aspects described above, the substrate layer is located on the opposite side from the sealant layer. Thus, when each laminated article is used to make a packaging bag, the sealant layer is located on the inner side of the bag, while the substrate layer is located on the outer side of the bag. This offers the advantage that the texture of the substrate layer can be viewed from outside the packaging bag.

### (Fourth Aspect)

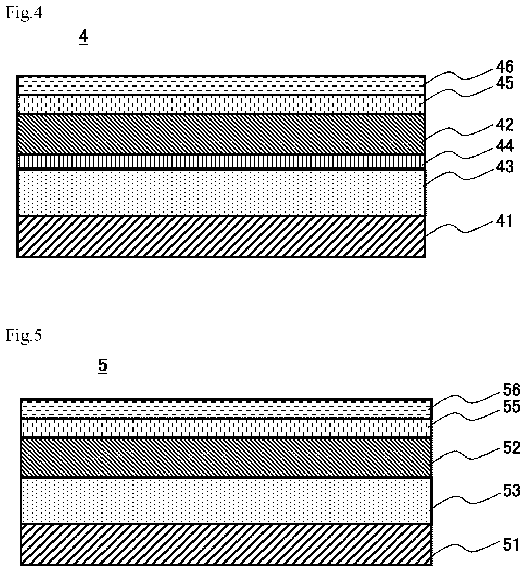

As shown in FIG. 4, a laminated article 4 according to a fourth aspect of the present embodiment includes a sealant layer 41, a substrate layer 43, an adhesive layer 44, a gas barrier layer 42, a printed layer 45, and a protective layer 46 which are arranged in this order.

The sealant layer 41 is preferably a resin layer formed on the substrate layer 43 by an extrusion lamination method or a coating method. The adhesive layer 44 is preferably formed from an adhesive that can be used in dry lamination and particularly preferably formed from a urethane adhesive. The gas barrier layer 42 is preferably a metal foil such as an aluminum foil.

The method for producing the laminated article 4 is not limited to a particular technique. A method is preferred in which the sealant layer 41 is formed on the substrate layer 43 by an extrusion lamination method or a coating method and then dry lamination is carried out. The order of the steps may be reversed.

For example, first, a resin material containing P3HB3HH is melted and extruded from a die, and extrusion lamination is performed in which the sealant layer 41 made of the resin material is formed on one side of paper or cellophane serving as the substrate layer 43. Alternatively, a coating liquid containing P3HB3HH may be prepared and applied to one side of paper or cellophane serving as the substrate layer 43, and then the applied coating liquid may be dried to form the sealant layer 41. The resulting layered structure made up of the sealant layer 41 and the substrate layer 43 is combined with the gas barrier layer 42 by dry lamination in which a metal foil forming the gas barrier layer 42 is bonded to the substrate layer 43 of the layered structure via the adhesive layer 44. After that, the printed layer 45 is formed on the substrate layer 43 and, if necessary, the protective layer 46 is formed on the printed layer 45. In this way, the laminated article 4 can be produced.

### (Fifth Aspect)

As shown in FIG. 5, a laminated article 5 according to a fifth aspect of the present embodiment includes a sealant layer 51, a substrate layer 53, a gas barrier layer 52, a printed layer 55, and a protective layer 56 which are arranged in this order. The sealant layer 51 is preferably a resin layer formed on the substrate layer 53 by an extrusion lamination method or a coating method. The gas barrier layer 52 is preferably a coating layer containing a resin and/or an inorganic substance.

The method for producing the laminated article 5 is not limited to a particular technique. A method is preferred in which the sealant layer 51 is formed on the substrate layer 53 by an extrusion lamination method or a coating method and then the gas barrier layer 52 is formed on the substrate layer 53 by a coating method. The order of the steps may be reversed.

For example, first, the sealant layer 51 is formed on the substrate layer 53 by an extrusion lamination method or a coating method as in the fourth aspect. Next, a coating liquid containing a resin and/or an inorganic substance (such as talc or clay) is prepared and applied to the substrate layer 53, and then the applied coating liquid is dried to form the gas barrier layer 52 made of the resin and/or the inorganic substance. After that, the printed layer 55 is formed on the gas barrier layer 52 and, if necessary, the protective layer 56 is formed on the printed layer 55. In this way, the laminated article 5 can be produced.

Alternatively, the laminated article 5 can be produced also by preparing paper on one side of which the gas barrier layer 52 is located and by forming the sealant layer 51 by an extrusion lamination method or a coating method on the other side of the paper on which the gas barrier layer 52 is not located.

### (Applications)

The laminated article according to the present embodiment can be used to form a molded article. The molded article may be the laminated article itself or may be one produced by processing the laminated article into a given shape or structure. The molded article is not limited to a particular product and may be any product including the laminated article. Examples of the molded article include paper, a film, a sheet, a tube, a plate, a rod, a packaging material (e.g., a bag), a container (e.g., a bottle), and a part. In terms of addressing marine pollution, the molded article is preferably a packaging material or a container.

The molded article may be produced by secondary processing in which different portions of the sealant layer are bonded together by heat sealing. Examples of such a molded article include, but are not limited to, packaging bags such as a side seal package, a three side seal package, a pillow package, and a standing pouch. The molded article resulting from the heat sealing can exhibit high bond strength in the heat-sealed region. Additionally, the heat sealing can be performed at a relatively low temperature, and thus the substrate layer or any other layer can avoid discoloring due to heat during the heat sealing.

The molded article obtained through the heat sealing is suitable for use as any of various kinds of packaging materials or containers such as shopping bags, various other kinds of bags, packaging materials for foods or confectionery products, cups, trays, and cartons. That is, the molded article is suitable for use in various fields such as food industry, cosmetic industry, electronic industry, medical industry, and pharmaceutical industry. Since the molded article includes a gas barrier layer and further includes a sealant layer having high bond performance to a substrate layer and having good oxygen barrier properties and good water vapor barrier properties, the molded article is particularly suitable for use as a packaging material for holding a product such as a dried food (e.g., instant noodle, nut, or dried fruit), any kind of solid seasoning, a chocolate, or tea leaf whose flavor or taste needs to be kept intact.

The secondary processing can be performed using any technique known in the art. For example, the secondary processing can be performed by means such as a bag-making machine or form-fill-sealing machine. Alternatively, the secondary processing may be performed using a device such as a paper cup molding machine, a blanking machine, or a case former. In any of these processing machines, any known bonding technique can be used to obtain the molded article. Examples of the bonding technique include ordinary heat sealing, impulse sealing, ultrasonic sealing, high-frequency sealing, hot air sealing, and flame sealing. In particular, the molded article is preferably obtained through secondary processing using heat sealing; that is, the molded article preferably includes a heat-sealed region formed by heat sealing of the sealant layer. The heat sealing is preferably carried out between different portions of the sealant layer but may be carried out between the sealant layer and another layer.

The heat sealing temperature at which heat sealing is performed to obtain the molded article depends on factors such as the bonding technique used, the thickness of the sealant layer, and the type of the layer to be bonded to the sealant layer. In the case where the substrate layer is paper, where different portions of the sealant layer are heat-sealed together by means of a heat sealing tester equipped with a sealing bar, and where the laminated article is heated from both sides in the heat sealing, the heat sealing temperature is typically from 150 to 200°C, preferably from 160 to 190°C, and more preferably from 170 to 180°C. When the heat sealing temperature is in the above range, leakage of the sealant material can be prevented during the heat sealing, and at the same time satisfactory bond strength can be achieved by the heat sealing.

In the case where the sealant layer of the laminated article is heat-sealed to paper serving as the substrate layer of the laminated article by means of a heat sealing tester equipped with a sealing bar and where the laminated article is heated from both sides in the heat sealing, the heat sealing temperature is typically from 140 to 190°C, preferably from 150 to 180°C, and more preferably from 160 to 170°C. When the heat sealing temperature is in the above range, leakage of the sealant material can be prevented during the heat sealing, and at the same time satisfactory bond strength can be achieved by the heat sealing.

The heat sealing pressure at which heat sealing is performed to obtain the molded article depends on the bonding technique used. In the case of using a heat sealing tester equipped with a sealing bar, the heat sealing pressure is typically 0.1 MPa or more and preferably 0.3 MPa or more. When the heat sealing pressure is equal to or higher than the above level, satisfactory bond strength can be achieved by the heat sealing.

The molded article according to the present embodiment may, for the purpose of physical property improvement, be combined with another molded article (such as a fiber, a yarn, a rope, a woven fabric, a knit, a non-woven fabric, paper, a film, a sheet, a tube, a plate, a rod, a container, a bag, a part, or a foam) made of a different material than the molded article of the present embodiment. The material of the other molded article is also preferably biodegradable.

In the following items, preferred aspects of the present disclosure are listed. The present invention is not limited to the following items.

### [Item 1]

A laminated article including a substrate layer, a gas barrier layer, and a sealant layer, wherein
the sealant layer is located on one outermost side of the laminated article,
the sealant layer is a resin layer containing poly(3-hydroxybutyrate-co-3-hydroxyhexanoate), and
in a crystalline melting curve obtained by differential scanning calorimetry of the sealant layer, the sealant layer has at least one top temperature (Tma) in a range of 130 to 160°C.

### [Item 2]

The laminated article according to item 1, wherein the substrate layer has biodegradability.

### [Item 3]

The laminated article according to item 2, wherein the substrate layer is paper.

### [Item 4]

The laminated article according to any one of items 1 to 3, wherein the gas barrier layer includes at least one selected from the group consisting of a metal foil, a vapor-deposited metal film, a vapor-deposited metal oxide film, a vapor-deposited silicon oxide film, a polyvinyl alcohol film, and an ethylene-vinyl alcohol copolymer film.

### [Item 5]

The laminated article according to any one of items 1 to 4, wherein
in the crystalline melting curve obtained by the differential scanning calorimetry, the sealant layer further has at least one top temperature (Tmb) in a range of 40°C to below 130°C, and
a temperature difference between the top temperatures Tma and Tmb is 10°C or more.

### [Item 6]

The laminated article according to any one of items 1 to 5, further including a printed layer on an opposite side from the sealant layer.

### [Item 7]

A packaging material including the laminated article according to any one of items 1 to 6.

### [Item 8]

The packaging material according to item 7, including a region where different portions of the sealant layer are heat-sealed together.

### [Item 9]

A container including the laminated article according to any one of items 1 to 6.

### [Item 10]

The container according to item 9, including a region where different portions of the sealant layer are heat-sealed together.

### Examples

Hereinafter, the present invention will be specifically described based on examples. The technical scope of the present invention is not limited by the examples given below.

In Examples 1 to 4 and Comparative Examples 1 and 2, 30-µm-thick P3HB3HH films were used which were made by molding of resin materials listed below. Each film was made as follows: pellets obtained through melting and kneading by a twin-screw extruder were placed into a single-screw extruder, a melt of the pellets was extruded from a T-die mounted on the outlet end of the single-screw extruder, and the extrudate was taken up on a metal roll.

### (Example 1)

P3HB3HH (a): average ratio 3HB/3HH = 94/6 (mol%/mol%), weight-average molecular weight = 60 × 10⁴ g/mol: X13 1A (Kaneka Biodegradable Polymer PHBH^{™})

### (Example 2)

P3HB3HH (b): average ratio 3HB/3HH = 97/3 (mol%/mol%), weight-average molecular weight = 66 × 10⁴ g/mol): Produced according to Example 2 of WO 2019/142845

### (Example 3)

Blend of 55 wt% of P3HB3HH (b) used in Example 2 and 45 wt% of P3HB3HH (c) shown below (average ratio 3HB/3HH in whole blend = 85/15 (mol%/mol%))

P3HB3HH (c): average ratio 3HB/3HH = 71.8/28.2 (mol%/mol%), weight-average molecular weight = 66 × 10⁴ g/mol): Produced according to Example 9 of WO 2019/142845

### (Example 4)

P3HB3HH- and PHB-containing composition as taught in Example 6 of WO 2015/146195 (average ratio 3HB/3HH in P3HB3HH = 89.0/11.0 (mol%/mol%), PHB content in composition = 4.2 wt%)

### (Comparative Example 1)

P3HB3HH (d): average ratio 3HB/3HH = 99.2/0.88 (mol%/mol%)): Produced according to Comparative Example 1 of WO 2004/041936

### (Comparative Example 2)

P3HB3HH (e): average ratio 3HB/3HH = 83/17 (mol%/mol%)): Produced by culturing *Aeromonas Caviae* FA440 in a medium containing oleic acid as a carbon source at an adjusted concentration of 2 wt% and a yeast extract. This production was performed according to [0022] and Table 4 of Japanese Patent No. 3537274

### (Differential Scanning Calorimetry)

An aluminum pan was charged with 4 to 10 mg of a sample of each P3HB3HH film, and the sample was subjected to differential scanning calorimetry which used a differential scanning calorimeter and in which the sample was melted under a stream of nitrogen by increasing the temperature from 20 to 190°C at a rate of 10°C/min. In the crystalline melting curve obtained by the calorimetry, the top temperature of a melting point peak located in the range of 130 to 160°C was determined as the Tma. The top temperature of a melting point peak located in the range of 40°C to below 130°C was determined as the Tmb.

### [Results]

For the P3HB3HH film of Example 1, the Tma was 144°C.

For the P3HB3HH film of Example 2, the Tma was 152°C.

For the P3HB3HH film of Example 3, the Tma was 156°C and the Tmb was 48°C.

For the P3HB3HH film of Example 4, the Tma was 157°C and the Tmb was 107°C.

For the P3HB3HH film of Comparative Example 1, the Tma and the Tmb did not appear, and a melting point peak was observed at 165°C.

For the P3HB3HH film of Comparative Example 2, the Tma did not appear, and the Tmb was 119°C.

In each of Examples and Comparative Examples, a substrate layer, a sealant layer, and a gas barrier layer listed below were bonded together by dry lamination to produce a laminated article according to the first aspect.
Sealant layer: 30-µm-thick P3HB3HH film described above
First adhesive layer: Urethane adhesive layer formed by dry lamination
Gas barrier layer: 9-µm-thick aluminum foil
Second adhesive layer: Urethane adhesive layer formed by dry lamination
Substrate layer: Unbleached kraft paper with a weight per unit area of 50 g/m²

The following evaluation tests were conducted for each of the laminated articles. The results are shown in Table 1.

### (Method for Evaluating Bond Performance Achieved by Heat Sealing)

Each of the laminated articles was cut into a 15-mm-wide piece. Different portions of the sealant layer of the 15-mm-wide piece were placed on each other and pressure-bonded together by means of a heat seal tester (TP-701-B manufactured by Tester Sangyo Co., Ltd.) using a 20-mm-wide heat sealing bar under the following conditions: heating temperature = 180°C, gauge pressure = 0.2 MPa, and sealing time = 1 second. The resulting laminated article was left to cool to room temperature, and then the sealed surface was peeled off with a hand. The peeled surface was visually inspected, and ratings were made according to the following criteria.

### <Rating Criteria>

Good: The paper underwent material failure.
Poor: The paper did not undergo material failure, but peeling occurred at the interface.

### (Method for Evaluating Leakage of Sealant Material during Heat Sealing)

After pressure-bonding was performed in the way described above, the heat sealing bar was visually inspected, and ratings were made according to the following criteria.

### <Rating Criteria>

Good: The resin was not attached to the heat sealing bar.
Poor: The resin was attached to the heat sealing bar.

**[Table 1]**

| | Ex. 1 | Ex. 2 | Ex. 3 | Ex. 4 | Comp. 1 | Comp. 2 |
|---|---|---|---|---|---|---|
| Tma | 144 | 152 | 156 | 157 | - | - |
| Tmb | - | - | 48 | 107 | - | 119 |
| Top temperature other than Tma and Tmb | - | - | - | - | 165 | |
| Bond perofrmnace achieved by heat sealing | Good | Good | Good | Good | Poor | Good |
| Leakage of sealant material | Good | Good | Good | Good | Good | Poor |

Table 1 reveals the following findings. In Examples 1 and 2 where a P3HB3HH film having the Tma was used as the sealant layer and Examples 3 and 4 where a P3HB3HH film having the Tma and the Tmb was used as the sealant layer, the bond performance achieved by heat sealing was good, and leakage of the sealant material was not observed.

In contrast, in Comparative Example 1 where a P3HB3HH film having a melting point peak with a top temperature as high as 165°C was used as the sealant layer, the bond performance achieved by heat sealing was unsatisfactory although leakage of the sealant material was not observed.

In Comparative Example 2 where a P3HB3HH film having only a melting point peak with a top temperature as low as 119°C was used as the sealant layer, leakage of the sealant material was observed although the bond performance achieved by heat sealing was good.

### Reference Signs List

- 11, 21, 31, 41, 51: sealant layer
- 12, 22, 32, 42, 52: gas barrier layer
- 13, 23, 33, 43, 53: substrate layer
- 14, 14', 24, 34, 44: adhesive layer
- 15, 25, 35, 45, 55: printed layer
- 16, 26, 36, 46, 56: protective layer

## Claims

1. A laminated article comprising a substrate layer, a gas barrier layer, and a sealant layer, wherein
the sealant layer is located on one outermost side of the laminated article,
the sealant layer is a resin layer containing poly(3-hydroxybutyrate-co-3-hydroxyhexanoate), and
in a crystalline melting curve obtained by differential scanning calorimetry of the sealant layer, the sealant layer has at least one top temperature (Tma) in a range of 130 to 160°C.

2. The laminated article according to claim 1, wherein the substrate layer has biodegradability.

3. The laminated article according to claim 2, wherein the substrate layer is paper.

4. The laminated article according to claim 1 or 2, wherein the gas barrier layer comprises at least one selected from the group consisting of a metal foil, a vapor-deposited metal film, a vapor-deposited metal oxide film, a vapor-deposited silicon oxide film, a polyvinyl alcohol film, and an ethylene-vinyl alcohol copolymer film.

5. The laminated article according to claim 1 or 2, wherein
in the crystalline melting curve obtained by the differential scanning calorimetry, the sealant layer further has at least one top temperature (Tmb) in a range of 40°C to below 130°C, and
a temperature difference between the top temperatures Tma and Tmb is 10°C or more.

6. The laminated article according to claim 1 or 2, further comprising a printed layer on an opposite side from the sealant layer.

7. A packaging material comprising the laminated article according to claim 1 or 2.

8. The packaging material according to claim 7, comprising a region where different portions of the sealant layer are heat-sealed together.

9. A container comprising the laminated article according to claim 1 or 2.

10. The container according to claim 9, comprising a region where different portions of the sealant layer are heat-sealed together.
